# EUROPEAN PATENT APPLICATION

(11) **EP 1 876 508 A2**
(43) Date of publication of application: **09.01.2008**
(21) Application number: 07111719.6
(22) Date of filing: 04.07.2007
(51) Int. Cl.: G06F 1/16

(54) **Support and protection device for a flat screen display, such as an LCD display**

(30) Priority: 06.07.2006 IT RM20060355
(71) Applicant: Keymat industrie S.P.A., 85133 Napoli (IT)
(72) Inventor: Ricciolio, Massimo, 85133, Napoli (IT)
(74) Representative: Carangelo, Pierluigi

(57) **Abstract**

Device (1) for supporting and protecting an electronic flat-screen display device (20), the display device (20) including a display panel on which images to be displayed are intended to be formed,
characterised in that
the support and protection device (1) includes a front plate (2) made from substantially transparent material arranged in advanced position with respect to said display panel (20).

In a particularly preferred embodiment, the front plate (2) is made from tempered glass.

## Description

The present invention concerns a device for supporting and protecting an electronic flat-screen display device as defined in the preamble of the first claim.

In the state of the art it is known to make devices for supporting and protecting flat-screen display devices essentially using components made from plastic and metallic materials according to different configurations and combinations. For the purposes of the present description by electronic flat-screen display device we mean a liquid crystal display, a plasma display and similar electronic devices equipped with a front display panel.

For example, support and protection devices of the prior art, generally indicated with the term "cabinets", typically include:
- a front part (or front cabinet) shaped like a frame, equipped with a front opening suitable for cooperating with the front panel of the display device;
- a rear part (or back cabinet) that, coupling with the front part, is such as to form a space for housing the display device, the cables and the control/interface electronics of the display device;
- a shaped metal plate suitable for anchoring the control/interface electronics of the display device and of the various input and/or output ports;
- a support base to allow the assembly formed from the cabinet and from the display device to be positioned stably and substantially vertically on a support plane;
- input/output devices like for example a button panel, one or more LEDs, an infrared sensor generally made accessible through holes made in the front cabinet or in the back cabinet.

As an alternative or in addition to the support base it is possible to foresee suitable attachment means (wall bracket) suitable for fixing to the wall the assembly formed from the support and protection device from the display device to its internal content.

It has been observed that the support and protection devices described above with reference to the prior art are unable to provide adequate levels of protection for the display device, and in particular for the delicate display panel. The latter, if subjected to even a small shock, can indeed easily be irreversibly damaged.

One of the purposes of the present invention is to provide a support and protection device (in brief, cabinet) that is such as to avoid the drawback described above with reference to the prior art.

Such a purpose is accomplished through a support and protection device as defined in general in the attached claim 1. Advantageous embodiments of a device according to the present invention are defined in the attached dependent claims. Also forming the object of the present invention is a television screen or computer screen as defined in the attached claims 15 or 16.

Further characteristics and advantages of a device according to the present invention shall become clearer from the following description of non-limiting example embodiments thereof, in which:
- figure 1 represents a side view of a particularly preferred embodiment of a support and protection device in accordance with the present invention;
- figure 2 shows a front view of the support and protection device of figure 1; and
- figure 3 represents a rear view with parts detached of the support and protection device of figure 1.

In the figures, identical or similar elements shall be indicated with the same reference numerals.

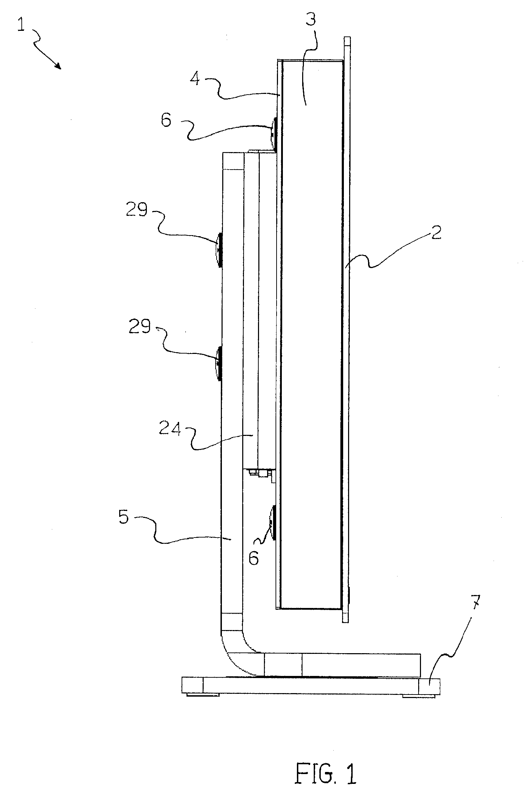

With reference to the attached figures, and in particular figure 1, a support and protection device, or cabinet, for an electronic flat-screen display device, like for example an LCD screen (display), or plasma screen or a similar device equipped with a display panel on which images to be displayed are intended to be electronically formed, is globally indicated with 1. The electronic display device and its panel cannot be seen in the representation of figure 1.

From now onwards, in the present description reference shall be made, without for this reason introducing any limitation, to a support and protection device 1 suitable for supporting and protecting an LCD screen, so that the assembly formed by the support and protection device 1 and the LCD screen forms a television set or, more generally, a television monitor or a computer monitor.

The support and protection device 1 includes a protective panel 2 in the form of a front plate made from essentially transparent material, distinct from the display panel of the LCD device, preferably made from tempered glass and arranged in advanced position with respect to the display panel of the LCD device. More preferably, the front plate 2 is made from extra-clear tempered glass and has a thickness equal to or greater than about 4 mm. Such a plate 2 faces and is parallel to the display panel of the LCD screen, preferably in contact with a free surface thereof, and has a greater area than the area of the display panel.

It should be observed that the advanced arrangement of the front plate 2 with respect to the surface of the display panel is advantageously such as to increase the angle of visibility, vertical and horizontal, of the panel itself.

Preferably, the front plate 2 has functional and/or ornamental serigraphy made on the side facing the display panel. For example, such serigraphy is in the form of opaque regions of the front plate 2, and preferably they include a frame-shaped pattern that surrounds the display panel.

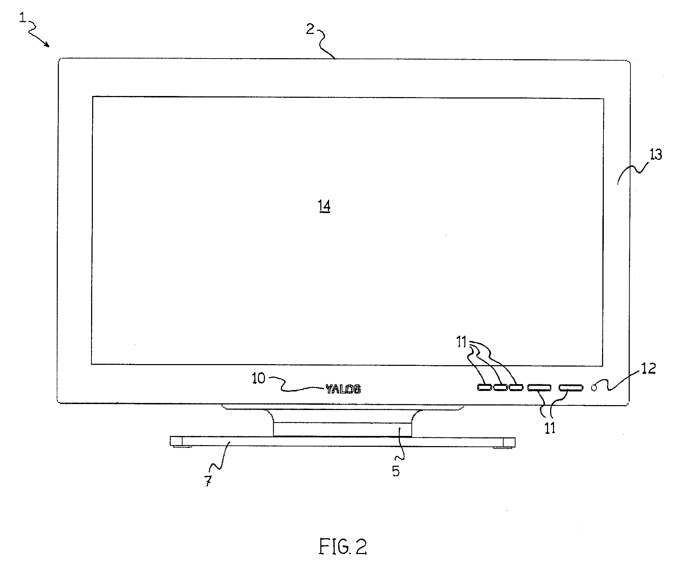

Figure 2 represents a particular embodiment of front plate 2 in which it is possible to see ornamental serigraphy 10, or functional serigraphy 11, 12. For example, the functional serigraphy 11 correspond to touch-sensitive keys foreseen in the support and protection device 1, whereas the serigraphed pattern 12 is arranged at an infrared receiver for remote control of the electronic display device. The ornamental serigraphy 10 represents, for example, the trademark of the device 1.

Possibly, it is possible to foresee serigraphy that is simultaneously functional and ornamental, like for example the transparent serigraphy 10 that can be rear-lit by an LED suitable for indicating that the LCD display device is switched on, off or in stand-by. In figure 2, the serigraphed area 13 represents an opaque frame pattern that surrounds the transparent area 14 corresponding to the screen of the display device LCD.

In an alternative embodiment the front plate 2 is made from transparent and synthetic material, for example plexiglas.

Again with reference to figure 1, the support and protection device 1 also includes attachment means 6 for fixing the front plate 2 to the LCD display device. In figure 1, such attachment means are in the form of pins just the heads 6 of which can be seen in the figure.

Preferably, the support and protection device 1 also includes a rear plate 4, preferably made from tempered glass, substantially parallel to the front plate 2. Preferably, such a rear plate 4 has a thickness that is greater than or equal to about 2 mm. The rear plate 4 can also be serigraphed so as to have transparent areas and opaque areas. Alternatively, the rear plate 4 can be made from metal or synthetic material, like for example plexiglas.

In a particularly advantageous embodiment, the support and protection device 1 also includes an outer crankcase 3 substantially shaped like a frame arranged between the front plate 2 and the rear plate 4 so as to define a housing space suitable for housing the electronic LCD display device. Preferably, the outer crankcase 3 is made from sheet metal (for example steel, stainless steel, or aluminium) that has been microperforated, i.e. carrying a plurality of holes such as to ensure air circulation inside the housing space for the electronic display device LCD.

The support and protection device 1 preferably includes support means 5, 7 suitable for allowing the vertical positioning of the device 1 on a horizontal plane. In the figures such means include a support base including a foot 7 and a vertical bracket 5. For example, the foot 7 and the bracket 5 are made from transparent glass, plexiglas or metal.

As an alternative or in addition to the support means 5, 7 it is possible to foresee means for fixing the support and protection device 1 to the wall.

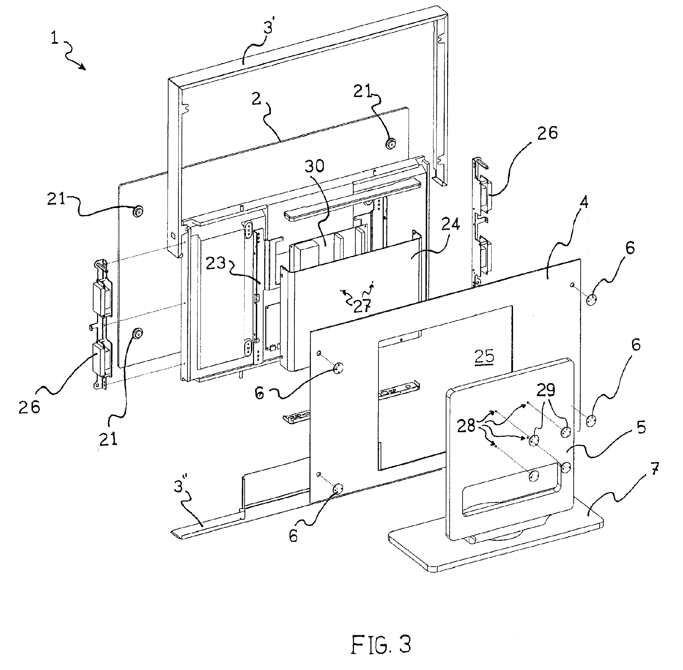

Figure 3 represents an exploded view of the support and protection device 1 in which some details of such a device can be seen in greater detail. In figure 3 it is possible to see, in particular, the rear side of the LCD display device 20.

As represented in figure 3, in a particularly advantageous embodiment, the frame-shaped outer crankcase 3 of figure 1 is formed from a U-shaped portion indicated with 3' and by a further portion 3" essentially shaped like a bar and able to be removably coupled with the U-shaped portion to form the frame-shaped outer crankcase 3.

Again with reference to figure 3, in a particularly advantageous embodiment, some bushings 21 are foreseen on the front plate 2 on the side thereof facing towards the electronic display device 20 to allow attachment, through the side brackets 26 and the pins 6, between the front plate 2 and the display device 20. Preferably, the same pins 6 and the same bushings 21 are used to fix the rear plate 4 and the outer crankcase 3', 3" to the front plate 2. Preferably, the bushings 21 are glued to the front plate 2.

Preferably, the support and protection device 1 includes a rear support plate 23 able to be coupled with the display device 20 to support the electronic control and feeding devices 30 of the display device 20. For example, the rear support plate 23 allows a printed circuit board 30 to which the electronic control and feeding devices are electrically connected and fixed to be fixed to the display device 20. An inner crankcase 24 that can be coupled with the support plate 23 is foreseen to define a housing space suitable for housing the electronic control and feeding devices 30. In a particularly advantageous embodiment, such an inner crankcase 24 crosses a through opening 25 foreseen in the rear plate 4, to allow:
- the attachment, through the holes 27, of the inner crankcase 24 to the support means 5, 7, through suitable holes 28 foreseen in them and intended to be crossed by the pins 29 (or equivalent attachment means) suitable for cooperating with the holes 27 foreseen on the inner crankcase 27; or
- the attachment to a wall, through the holes 27, of the inner crankcase 24, for example by foreseeing the arrangement of the holes 27 in accordance with the VESA standard.

As can be appreciated from what has been described, it is clear that a support and protection device according to the invention allows the aforementioned drawbacks with reference to devices belonging to the prior art to be overcome, ensuring effective protection for the electronic display device 20, and in particular for the delicate display panel.

It should also be observed that the provision of a front plate 2, as well as satisfying protection requirements, is such as to give a linear and uniform appearance to the front part of the protective device 1, for example allowing such a front part to be made entirely from glass. Moreover, the provision of touch-sensitive input devices (buttons) allows the uniform appearance given by the front plate 2 to not be altered.

Of course, a man skilled in the art can bring numerous modifications and variants to the support and protection device described above, in order to satisfy contingent and specific requirements, these modifications and variants all being covered by the scope of protection as defined by the following claims.

## Claims

1. Device (1) for supporting and protecting an electronic flat-screen display device (20), the display device (20) including a display panel on which images to be displayed are intended to be formed,
**characterised in that**
the support and protection device (1) includes a front plate (2) made from substantially transparent material arranged in advanced position with respect to said display panel (20).

2. Support and protection device (1) according to claim 1, wherein said front plate (2) is in contact with a free surface of said display panel.

3. Support and protection device (1) according to any one of the previous claims, wherein said front plate (2) has a larger area than the area of said display panel.

4. Support and protection device (1) according to any one of the previous claims, wherein said front plate (2) is a plate made from tempered glass.

5. Support and protection device (1) according to any one of the previous claims, wherein said plate has a thickness equal to or greater than about 4mm.

6. Support and protection device (1) according to claim 4, wherein said plate has ornamental and/or functional serigraphy (10, 11, 12, 13) made on the side of the plate facing said display panel.

7. Support and protection device (1) according to claim 6, wherein said serigraphy includes a frame-shaped pattern surrounding the display panel.

8. Support and protection device (1) according to claim 6, wherein said serigraphy is arranged at touch-sensitive keys.

9. Support and protection device (1) according to any one of the previous claims, also including a rear plate (4) substantially parallel to the front plate (2) and wherein said display device (20) is such as to be able to be arranged between said front plate (2) and said rear plate (4).

10. Support and protection device (1) according to claim 9, wherein said rear plate (4) is made from tempered glass.

11. Support and protection device (1) according to claims 9 or 10, also including an outer crankcase (3) substantially shaped like a frame and arranged between said front plate (2) and said rear plate (4) so as to define a space for housing said display device (20).

12. Support and protection device (1) according to any one of the previous claims, also including an inner crankcase (24) for housing electronic devices (30) for controlling and feeding said display device, said rear plate being equipped with an opening (25) suitable for being crossed by said inner crankcase (24).

13. Support and protection device (1) according to any one of the previous claims, also including attachment means (21) foreseen on the side of said front plate (2) facing towards said display device (20), suitable for fixing said display device (20) to said front plate (2).

14. Support and protection device (1) according to claim 13, wherein said attachment means include bushings (21) glued to said front plate (2).

15. LCD or plasma monitor, for television or a computer, including an electronic display device (20),
**characterised in that** it includes a support and protection device (1) in accordance with any one of the previous claims.

16. Monitor according to claim 15, having a front part including said front plate (2) and made exclusively from tempered glass.
All substantially according to what has been described and illustrated, and for the specified purposes.
